# EUROPEAN PATENT APPLICATION

(11) **EP 4 339 468 A1**
(43) Date of publication of application: **20.03.2024**
(21) Application number: 22195524.8
(22) Date of filing: 14.09.2022
(51) Int. Cl.: F16B 37/08, E04B 1/26

(54) **CONNECTOR ARRANGEMENT**

(71) Applicant: Hilti Aktiengesellschaft, 9494 Schaan (LI)
(72) Inventor: Sanchez Lopez, Marco, 9000 St Gallen (CH); Bencsik, Gábor Menyhért, 6035 Ballószög (HU)
(74) Representative: Hilti Aktiengesellschaft Corporate Intellectual Property

(57) **Abstract**

Connector arrangement for connecting a timber column to a base, comprising a releasable split nut for releasably gripping a rod, wherein the split nut is arranged on the timber column, and a quickly mountable nut that allows insertion of the rod into the quickly mountable nut but inhibits withdrawal of the rod from the quickly mountable nut, wherein the quickly mountable nut is arranged on the base.

## Description

The invention relates to a connector arrangement for connecting a timber column to a base, and to a split nut that can be part of said connector arrangement.

WO21032536 A1, US2001055521 A1, US2003175094 A1, US5468105 and JP H05331916 A describe various types of quickly mountable nuts.

It is an object of the invention to provide devices and arrangements useful for connecting timber columns to bases.

This object is achieved by an arrangement according to claim 1 and by a device according to claim 3. Dependent claims refer to preferred embodiments of the invention.

An inventive connector arrangement for connecting a timber column to a base comprises a releasable split nut for releasably gripping a rod, wherein the split nut is arranged on the timber column, and a quickly mountable nut that allows insertion of the rod into the quickly mountable nut but inhibits withdrawal of the rod from the quickly mountable nut, wherein the quickly mountable nut is arranged on the base.

The split nut is preferably arranged within the timber column, at least in part, more preferably in its entirety. However, it might also protrude from the surface of the timber column. Likewise, the quickly mountable nut is preferably arranged within the base, at least in part, more preferably in its entirety. However, it might also protrude from the surface of the base. The base can for example be a timber base, a concrete base, or a steel base. In particular, the base can be a timber beam or it can be a second timber column.

The connector arrangement allows connecting the timber column with the base by means of a rod, in particular a threaded rod or otherwise surface-structured rod. When the timber column is connected to the base, the rod is both gripped by the split nut (that is provided on the timber column) and engaged by the quickly mountable nut (that is provided on the base), thereby connecting the column and the base with one another.

The quickly mountable nut allows particular fast assembly of the structure, as it quickly engages the rod by simply plugging the rod into the quickly mountable nut, whereas subsequent linear removal of the rod is obstructed by the quickly mountable nut. In particular, for this purpose, the quickly mountable nut comprises at least one catch, wherein the catch can preferably be a sliding wedge. However, other catch types, such as for example lever type pawls or spring type pawls, can also be envisaged.

The split nut, on the other hand, allows to release the connection between the timber column and the base by opening the split nut and thus releasing the rod from the split nut. This allows particularly fast and easy disassembling of a building structure, for example at the end of intended lifetime and/or for re-use.

According to the invention, the quick connecting functionality and the release functionality, respectively, are provided by separate means and at opposite sides of the rod, namely by the quickly mountable nut and by split nut, respectively. This can facilitate a particularly simple and thus cost-efficient construction and/or provide particularly good performance.

The assembly sequence for connecting the timber column to the base by means of the connector arrangement can be as follows:
1. The split nut is closed, in particular by means of the jaw lock described further below.
2. The closed split nut is inserted into the timber column, in particular into a bore provided thereon.
3. The rod is screwed into the closed split nut located within the timber column.
4. The timber column is guided towards the base, so that the rod that is engaged by the split nut that is provided within the timber column enters the quickly mountable nut, where the rod is engaged by the quickly mountable lock, thereby connecting the timber column with the base.

If the timber column is to be released from the base at a later stage, the split nut can be opened, in particular by releasing the jaw lock described further below, so that the rod disengages from the split nut and thus from the timber column.

The rod can be considered to be part of the connector arrangement. Accordingly, the connector arrangement might further comprise a rod, which is gripped by the split nut, and which is engaged by the quickly mountable nut, thereby connecting the timber column and the base. Thus, the connector arrangement is used as intended.

The invention also relates to a split nut, which is preferably used in a connector arrangement as described here, comprising
- a sleeve, which is provided with a lateral insertion opening for inserting a rod into the sleeve,
- a first plunger jaw for engaging the rod when the rod is inserted into the sleeve through the insertion opening, which first plunger jaw is arranged at least partly within the sleeve,
- a second plunger jaw for engaging the rod when the rod is inserted into the sleeve through the insertion opening, which second plunger jaw is arranged at least partly within the sleeve, and
- a jaw lock for clamping the first plunger jaw and the second plunger together so as to engage the rod between the first plunger jaw and the second plunger jaw.

The lateral insertion opening is provided laterally within the sleeve (i.e. it is provided remote from the faces of the sleeve), and it penetrates the sleeve, so as to allow insertion of the rod from outside of the sleeve into the inside of the sleeve. A pierceable membrane might provide to temporarily seal the insertion opening.

In particular, the first plunger jaw and/or the second plunger jaw are each provided slideably with the sleeve, so as to permit engagement and disengagement of the rod by linear motion. Advantageously, the first plunger jaw and/or the second plunger jaw are each arranged entirely within the sleeve.

The jaw lock is able to clamp the first plunger jaw and the second plunger together, so as to engage the rod when the rod is positioned between the first plunger jaw and the second plunger jaw. The jaw lock can be designed for drawing the first plunger jaw and the second plunger jaw together, or/and for pushing these elements together, so as to clamp these elements together.

It is particularly preferred that the jaw lock comprises at least one threaded bolt, which extends within the first plunger jaw and within the second plunger jaw. The thread of the threaded bolt can provide a particularly efficient clamping mechanism. Advantageously, the threaded bolt is headed, with the head abutting (directly or indirectly) against one of the plunger jaws, and with the thread of the threaded bolt engaging the other one of the plunger jaws. This can provide for a particularly easy and performant design.

The split nut may, advantageously, further comprise a fixing screw, which extends through the sleeve into the second plunger jaw. This allows positioning the second plunger jaw (and preferably the first plunger jaw connected thereto) with respect to the sleeve in a particularly easy manner, so that positioning of the rod between the plunger jaws can be achieved in particular easy manner. This can allow particularly efficient handling of the split nut. It is particularly advantageous that the fixing screw extends through the sleeve with jaw operation play, which jaw operation play allows to displace the second plunger jaw between a rod engagement position (in which it can engage the rod inserted into the split nut) and a rod disengagement position (in which it disengages the rod inserted into the split nut). Thus, the jaw operation play allows to close and to open the split nut without the need to unscrew the fixing screw from the second plunger jaw. This can further facilitate handling. The jaw operation play might e.g. be provided by an elongate hole or another type of oversized hole in the sleeve, in which the fixing screw is positioned.

According to another preferred embodiment of the invention, a threaded pull-out bore is provided within the first plunger jaw. For opening the split nut, a threaded pull-out bar can be screwed into the pull-out bore, and by pulling the pull-out bar (with respect to the sleeve), the first plunger jaw can be pulled into a rod disengagement position (in which it disengages the rod inserted into the split nut). This can further facilitate handing of the split nut.

According to another preferred embodiment of the invention, the first plunger jaw comprises a first jaw groove for receiving the rod and/or the second plunger jaw comprises a second jaw groove for receiving the rod. This can further improve engagement in particularly easy manner. The jaw grooves might be provided with protrusions for engaging the rod, such as thread flights, noses, or others.

Preferably, the sleeve has a circular cylindrical lateral surface, at least in an area surrounding the insertion opening. Accordingly, the split nut is a barrel nut, which can for example be advantageous in view of force transfer into the adjacent column

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a sectional view of a connector arrangement that connects a timber column to a base by means of a rod.
Figure 2 is a perspective view of the connector arrangement of figure 1, including the rod, but with the column and the base omitted.
Figure 3 is an exploded sectional view of the connector arrangement of figure 1, including the rod, but with the column and the base omitted.
Figure 4 is an exploded perspective view of the connector arrangement of figure 1, including the rod, but with the column and the base omitted.

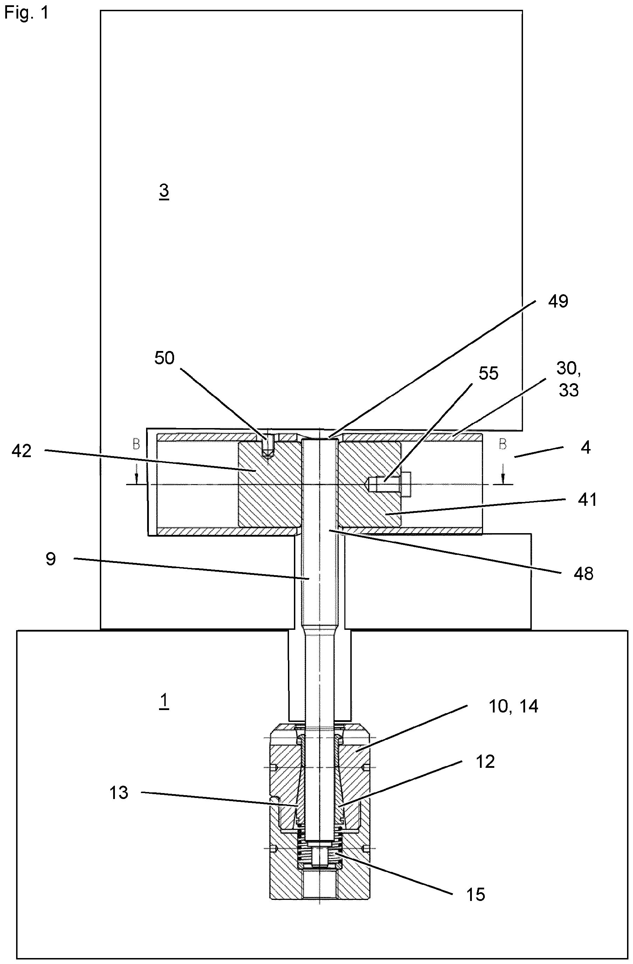

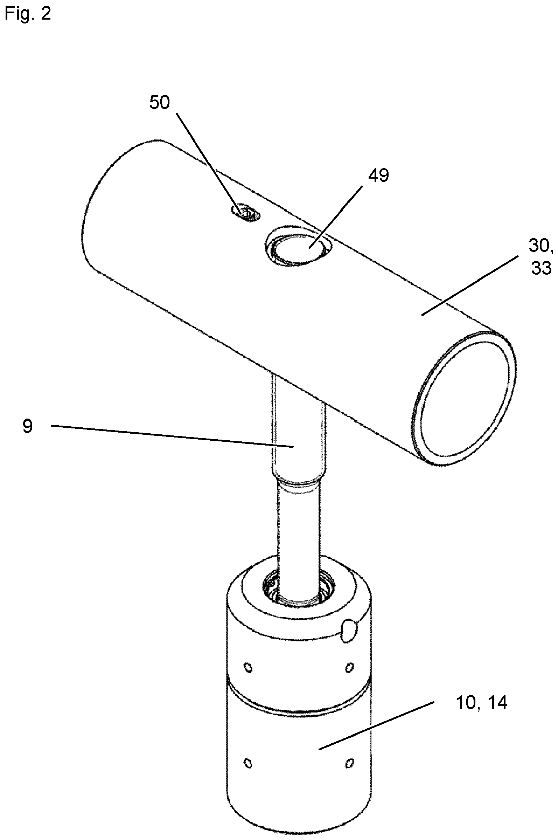

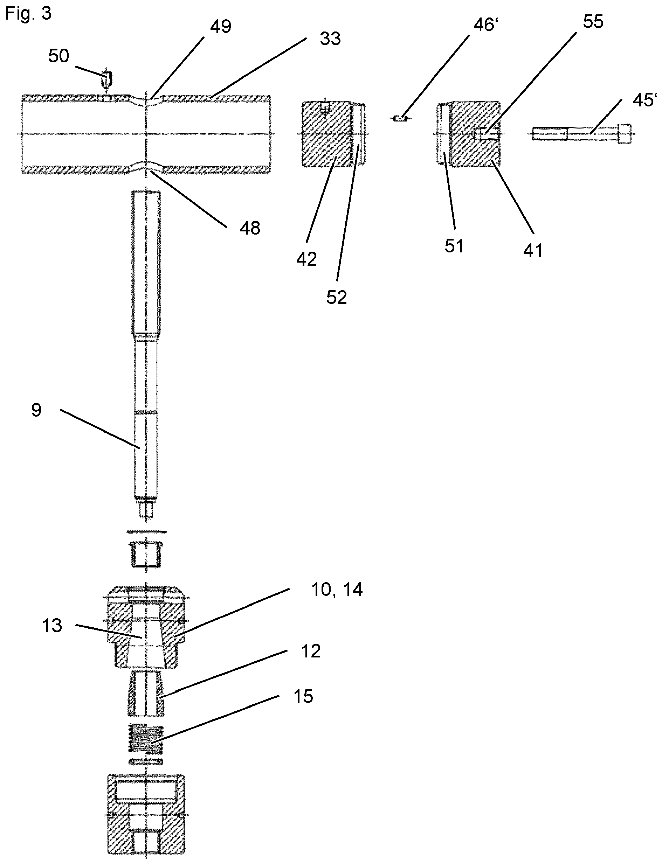

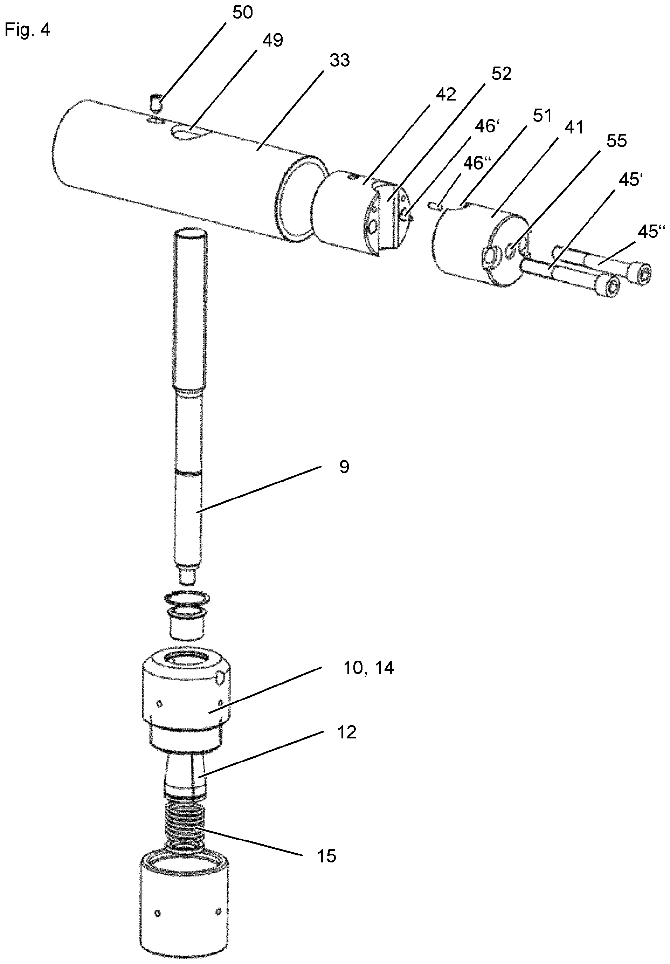

An example of a connector arrangement is shown in figures 1 to 4.

The connector arrangement is intended to connect a timber column 3 to a base 1 by means of a rod 9. The base 1 can be, by way of example, a second timber column, a timber rod, or a concrete base.

The rod 9 is in particular a metal rod, more preferably a steel rod. The rod 9 has preferably a structured lateral surface for particularly effective engagement. In particular, the lateral surface can be threaded.

The connector arrangement comprises a quickly mountable nut 10 for gripping and engaging the rod 9 by axially pushing the rod 9 into the quickly mountable nut 10, wherein the quickly mountable nut 10 is arranged within the base 1. In the present embodiment, the quickly mountable nut 10 comprises catches 12 in the form of sliding wedges that are arranged in a tapering chamber 13 of a housing 14 of the quickly mountable nut 10. However, other mechanisms, that likewise allow insertion of the rod 9 into the quickly mountable nut 10 but obstruct oppositely directed removal are also feasible. Such other mechanisms might include for example pawl levers or springs as catches. In the shown embodiment, a compression coil spring 15 is provided for biasing the catches 12, but this is an example only.

The connector arrangement further comprises a split nut 30 for releasably engaging the rod 9. The split nut 30 is a barrel nut, which is arranged within a bore 4 provided in the timber column 3. The split nut 30 comprises a sleeve 33, which has a generally circular cylindrical lateral surface, which defines the barrel nut surface. A lateral insertion opening 48, located at the lateral surface of the sleeve 33, extends through the sleeve 33 from outside of the sleeve 33 into the sleeve 33. Located oppositely on the sleeve 33, and located, likewise, at the lateral surface of the sleeve 33, a lateral exit opening 49 extends through the sleeve33 from outside of the sleeve 33 into the sleeve 33. The rod 9 can be inserted through the insertion opening 48 from outside of the sleeve 33 into sleeve 33. The insertion opening 48 and the exit opening 49 are aligned, so that the rod 9 can be passed through both openings 48 and 49 so as to traverse the sleeve 33.

In the present embodiment, the sleeve 33 is open at both at its faces. However, in other embodiments, the sleeve 33 might be closed at one of its faces or at both of its faces, be it by an integral (with respect to the sleeve 33) plug or by a non-integral (with respect to the sleeve 33) plug, i.e. by a separate plug.

The lateral surface of sleeve 33 is circular cylindrical at least in an area surrounding the insertion opening 48. In the present embodiment, the lateral surface of sleeve 33, i.e. the outer surface, is circular cylindrical throughout.

The split nut 30 further comprises a first plunger jaw 41 and a second plunger jaw 42, which are both arranged within the sleeve 33. The first plunger jaw 41 and the second plunger jaw 42 are slidable with respect to the sleeve 33 and are arranged on opposite sides of a rod insertion axis that extends through the insertion opening 48 and, if provided, through the exit opening 49. Consequently, each of the plunger jaws 41 and 42 can be, slideably, brought into contact with the rod 9 when the rod 9 is inserted through the insertion opening 48 into the sleeve 33, so as to engage the rod 9 so as to lock the rod 9 in the split nut 30 against being pulled out of the insertion opening 48, and each of the plunger jaws 41 and 42 can be, slideably, brought out of contact with the rod 9 when the rod 9 is inserted through the insertion opening 48, so as to release the rod 9.

The split nut 30 further comprises a jaw lock, which in turn comprises two headed, threaded bolts 45' and 45". Each of said bolts 45' and 45" extends within the first plunger jaw 41 and within the second plunger jaw 42. Each of said bolts 45' and 45" has a head, which is intended to abut against the first plunger jaw 41, and a thread, which threadedly engages the second plunger jaw 42. In the shown embodiment, the bolts 45' and 45" are internal hex head screws, but other drives could also be used, such as external hex heads.

The split nut further comprises a least one alignment pin, which extends within the first plunger jaw 41 and within the second plunger jaw 42. In the shown embodiment, by way of example, two alignment pins 46' and 46" are provided. The at least one alignment pin can provide for a particularly tight alignment of the plunger jaws 41 and 42 with respect to one another, whilst providing the bolts 45' and 45" with the play necessary for screw operation.

The split nut 30 further comprises a fixing screw 50, which extends through the sleeve 33 into the second plunger jaw 42. In the present embodiment, an elongate hole is provided in the sleeve 33 where the fixing screw passes through the sleeve 33. The elongate hole provides the fixing screw 50 and thus the second plunger jaw 42 which is engaged by the fixing screw 50 with jaw operation play with respect to the sleeve 33. This jaw operation play allows to shift the second plunger jaw 42 between a rod 9 engagement position, where it engages the rod 9 located within the sleeve 33, and a rod 9 disengagement position, where it does not engage the rod 9 located within the sleeve 33. However, an elongate hole is exemplary only, and other shaped holes might also be provided.

The first plunger jaw 41 comprises a first jaw groove 51 for receiving the rod 9 and the second plunger jaw 42 comprises a second jaw groove 52 for receiving the rod 9. The jaw grooves 51 and 52 have both the shape of a segment of a circular cylinder, optionally with engagement protrusions such a thread flights provided thereon.

A threaded pull-out bore 55 is provided within the first plunger jaw 41. The pull-out bore 55 is accessible from a face of the sleeve 33 and allows to (screwingly) engage the first plunger jaw 41 e.g. by means of a pull-out bar. By pulling the engaged pull-out bar with respect to the sleeve, the first plunger jaw 41 can be advanced to said face of the sleeve 33 and can be brought into a rod 9 disengagement position.

## Claims

1. Connector arrangement for connecting a timber column (3) to a base (1), comprising a releasable split nut (30) for releasably gripping a rod (9), wherein the split nut (30) is arranged on the timber column (3), and
a quickly mountable nut (10) that allows insertion of the rod (9) into the quickly mountable nut (10) but inhibits withdrawal of the rod (9) from the quickly mountable nut (10), wherein the quickly mountable nut (10) is arranged on the base (1).

2. Connector arrangement according to claim 1,
**further comprising**
a rod (9), which is gripped by the split nut (30), and which is engaged by the quickly mountable nut (10), thereby connecting the timber column (3) and the base (1).

3. Split nut (30), in particular for use in a connector arrangement according to any of claims 1 or 2,
**comprising**
- a sleeve (33), which is provided with a lateral insertion opening (48) for inserting a rod (9) into the sleeve (33),
- a first plunger jaw (41) for engaging the rod (9) when the rod (9) is inserted into the sleeve (33) through the insertion opening (48), which first plunger jaw (41) is arranged at least partly within the sleeve (33),
- a second plunger jaw (42) for engaging the rod (9) when the rod (9) is inserted into the sleeve (33) through the insertion opening (48), which second plunger jaw (42) is arranged at least partly within the sleeve (33), and
- a jaw lock for clamping the first plunger jaw (41) and the second plunger together so as to engage the rod (9) between the first plunger jaw (41) and the second plunger jaw (42).

4. Split nut (30) according to claim 3,
**characterized in that**
the jaw lock comprises at least one threaded bolt (45', 45"), which extends within the first plunger jaw (41) and within the second plunger jaw (42).

5. Split nut (30) according to any of claims 3 or 4,
**further comprising**
a fixing screw (50), which extends through the sleeve (33) into the second plunger jaw (42).

6. Split nut (30) according to claim 5,
**characterized in that**
the fixing screw (50) extends through the sleeve (33) with jaw operation play, which jaw operation play allows to displace the second plunger jaw (42) between a rod (9) engagement position and a rod (9) disengagement position.

7. Split nut (30) according to any of claims 3 to 6,
**characterized in that**
a threaded pull-out bore (55) is provided within the first plunger jaw (41).

8. Split nut (30) according to any of claims 3 to 7,
**characterized in that**
the first plunger jaw (41) comprises a first jaw groove (51) for receiving the rod (9) and/or the second plunger jaw (42) comprises a second jaw groove (52) for receiving the rod (9).

9. Split nut (30) according to any of claims 3 to 8,
**characterized in that**
the sleeve (33) has a circular cylindrical lateral surface, at least in an area surrounding the insertion opening (48).
